Europäisches Patentamt

European Patent Office

Office européen des brevets

(11) Veröffentlichungsnummer: **0 072 502**
B1

# (12) EUROPÄISCHE PATENTSCHRIFT

(45) Veröffentlichungstag der Patentschrift:
01.06.88

(51) Int. Cl.⁴: **G 12 B 9/10,** G 01 D 11/30,
H 02 B 1/04

(21) Anmeldenummer: **82107076.0**

(22) Anmeldetag: **05.08.82**

(54) **Vorrichtung zur Befestigung von Messinstrumenten in Schalttafeln.**

(30) Priorität: **08.08.81 DE 3131542**

(43) Veröffentlichungstag der Anmeldung:
**23.02.83 Patentblatt 83/8**

(45) Bekanntmachung des Hinweises auf die Patenterteilung:
**01.06.88 Patentblatt 88/22**

(84) Benannte Vertragsstaaten:
**AT CH FR LI NL**

(56) Entgegenhaltungen:
**DE - A - 2 360 359**
**DE - B - 1 290 728**

(73) Patentinhaber: **METRAWATT GMBH NÜRNBERG,
Thomas-Mann-Strasse 20, D-8500 Nürnberg (DE)**

(72) Erfinder: **Wörnlein, Hans Jürgen, Zugspitzstrasse 72,
D-8500 Nürnberg (DE)**

(74) Vertreter: **Kempe, Wolfgang, Dr. et al, c/o BROWN,
BOVERI & CIE AG ZPT Postfach 351,
D-6800 Mannheim 31 (DE)**

## Beschreibung

Die Erfindung betrifft eine Vorrichtung zur Befestigung von Messinstrumenten in Schalttafeln der im Oberbegriff des Anspruchs 1 genannten Art.

Aus der DE-A-1 290 728 ist eine Befestigungsvorrichtung bekannt, bei der zwei am Umfang eines Gerätegehäuses angebrachte Blattfedern sich gegen eine das Gerät aufnehmende Schalttafel abstützen. Die Blattfedern sind hierzu mit gerundeten Randpartien versehen, die längs zweier Linien, welche einen gegen die Stirnseite des Gerätes weisenden Winkel bilden, leicht aufgebogen sind. Hierdurch erhalten sie eine schwach V-förmige Gestalt, so dass sich zwei gegenüber dem runden Gehäuse entsprechend abstehende Flügel ergeben. Beim Einstecken des Gerätes in die Schalttafel werden die Flügel durch den Schalttafelausschnitt an das Gehäuse gepresst, doch muss der Schalttafelausschnitt so gross sein, dass ein Hängenbleiben an der auf dem Gehäusemantel aufliegenden Blattfeder vermieden wird. Ein entsprechend grosser Schalttafelausschnitt führt aber zu einem lockeren Sitz des Gerätes. Weiterhin ist die Blattfeder durch Punktschweissung oder Nieten fest mit dem Gehäuse verbunden, so dass ein nachträgliches Entfernen oder Anbringen nicht möglich ist.

Aufgabe der Erfindung ist es, eine Vorrichtung zur Befestigung von Messinstrumenten in Schalttafeln entsprechend der im Oberbegriff des Anspruchs 1 genannten Art zu schaffen, die einerseits mit einem relativ kleinen an dem Umfang des Messinstrumentes angepassten Schalttafelausschnitt auskommt und die andererseits nach Bedarf alternativ oder zusätzlich zu anderen am Messinstrument vorgesehenen Befestigungsvorrichtungen zur Anwendung kommen kann.

Diese Aufgabe wird durch die im Anspruch 1 gekennzeichneten Merkmale gelöst, zweckmässige Ausgestaltungen und Weiterbildungen der Erfindung sind in den Unteransprüchen genannt.

Die Platte wird zunächst durch einen Stanzvorgang kostengünstig hergestellt. Nach dem Stanzen wird der Halterungs- und Klemmteil in einem Arbeitsgang in die gewünschte Form gebogen. Bei der Montage an das Gehäuseteil ist die Platte mittels des Halterungsteils durch einfaches Eindrücken in das Gehäuse an diesem fest fixiert. Ebenso leicht kann die Platte wieder vom Gehäuse mittels einfacher dornartiger Werkzeuge z.B. einem Schraubendreher gelöst werden. Das Ein- und Ausbauen des Gehäuses in eine Mosaik- oder Schalttafel wird durch einfaches Eindrücken bzw. Herausziehen des Gehäuses in einem einzigen Arbeitsgang erreicht. Das Gehäuse schnappt beim Eindrücken hinter die Schalttafelwand ein und löst sich durch einfaches Ziehen des Gehäuses wieder aus der Schalttafel heraus. Es lassen sich somit ohne grossen Aufwand an Montagearbeiten die Messinstrumente jederzeit auch nachträglich austauschen. Veränderungen an den Instrumenten können durch veränderte Prozessparameter oder aus anderen Gründen herrühren. Der Vorgang des Ein- und Ausbauens des Messgerätegehäuses ist hierbei beliebig oft wiederholbar. In Sonderfällen, in denen es auf eine dauerhafte Halterung ankommt, kann das Messinstrument in eingebautem Zustand in bekannter Weise an der Schalttafel zusätzlich befestigt werden.

Die U-förmigen Enden der Platte stehen parallel zueinander und besitzen federnde Rastklinken. Im Montagezustand der Platte befinden sich die beiden Enden in schlitzförmigen Ausnehmungen im Gehäuseteil des Messinstruments. Damit ist der Halterungsteil der Platte verdreh- und kippfest mit dem Gehäuse verbunden. Selbst ein Verkanten der Platte ist durch die beiden parallel zueinander stehenden Enden nicht möglich. Ein ungewolltes Lösen der Platte vom Gehäuseteil wird durch die Rastklinken verhindert. Ein gewolltes Abmontieren der Platte vom Gehäuse ist z.B. mit einem Schraubendreher möglich. Ein leichter Druck auf die Rastklinken löst die Verankerung der Enden der Platte.

Der Halterungsteil der Platte ist plan in einer gleich grossen Ausnehmung im Gehäuse eingepasst, ohne die Aussenmasse des Gehäuses zu vergrössern. Diese besondere Ausbildung der an sich dünnen Platte ermöglicht das einfache Montieren des Gehäuses durch die Öffnung in der Mosaik- oder Schalttafel.

Der Klemmteil der Platte ist aussermittig am Halterungsteil angeordnet. Die Aussermittigkeit bezieht sich hierbei auf die Einschubrichtung des Gehäuseteils.

Der Klemmteil der Platte ist mittig zum Gehäuse angeordnet. Am Gehäuse liegen zwei Platten an gegenüberliegenden Flächen des Gehäuses auf, die mittige Anordnung zum Gehäuseteil sorgt für eine gleichmässige Verteilung der Befestigungskräfte.

Der V-förmige Klemmteil der Platte besitzt ein ebenes Mittelteil, das plan auf dem Gehäuse aufliegt. Die auftretenden Kräfte am Klemmteil werden über das Mittelteil auf das Gehäuse flächenmässig günstig übertragen. Die Kräfte treten bei der Montage des Gehäuses und während der Haltefunktion auf.

Die abgewinkelten Federflächen seitlich am Mittelteil ragen vor der Montage über den quaderförmigen Aussenumriss des Gehäuses hinaus. Der federnde Klemmteil der Platte wird beim Einschieben des Gehäuses in die Mosaik- oder Schalttafeln aufgespreizt, da der V-förmige Klemmteil in seinen Aussenabmassen grösser ist als die quadratische Öffnung an den Mosaik- oder Schalttafeln.

Die Einrastschrägen der Federflächen schnappen nach der Montage des Gehäuses hinter die Schalttafelwand ein und fixieren das Gehäuse lösbar an der Schalttafel. Während des Einschiebens des Gehäuses in die Mosaik- oder Schalttafel wird der V-förmige Klemmteil über Spannschrägen auseinandergebogen. Die Einrastschrägen der Federflächen sind so abgeschrägt, dass nach der Befestigung durch leichtes Eindrücken des Gehäuses die Federflächen an der Mosaik- oder Schalttafel einschnappen. Ein Lösen des Messinstrumentgehäuses aus der Mosaik- oder Schalttafel wird ebenfalls über die Einrastschrägen ermöglicht. Das Gehäuseteil ist im Einbauzustand mit vier Befestigungspunkten an der Mosaikplatte gleichmässig gehalten. Ein Kippen der Platte im Einbauzustand des Gehäuses wird durch die obengenannten Rastklinken an den Enden des Halterungsteils der Platte verhindert.

Weitere Vorteile und Merkmale der Erfindung gehen aus der folgenden Beschreibung in Verbindung mit den gezeigten Ausführungsbeispielen hervor.

Es zeigen:

Fig. 1 ein Messinstrumentengehäuse, eingebaut in einer Mosaik- oder Schalttafel,

Fig. 2 eine Draufsicht auf eine Befestigungsvorrichtung in Form einer Platte,

Fig. 3 eine Seitenansicht der Befestigungsvorrichtung,

Fig. 4 eine zweite Seitenansicht der Befestigungsvorrichtung.

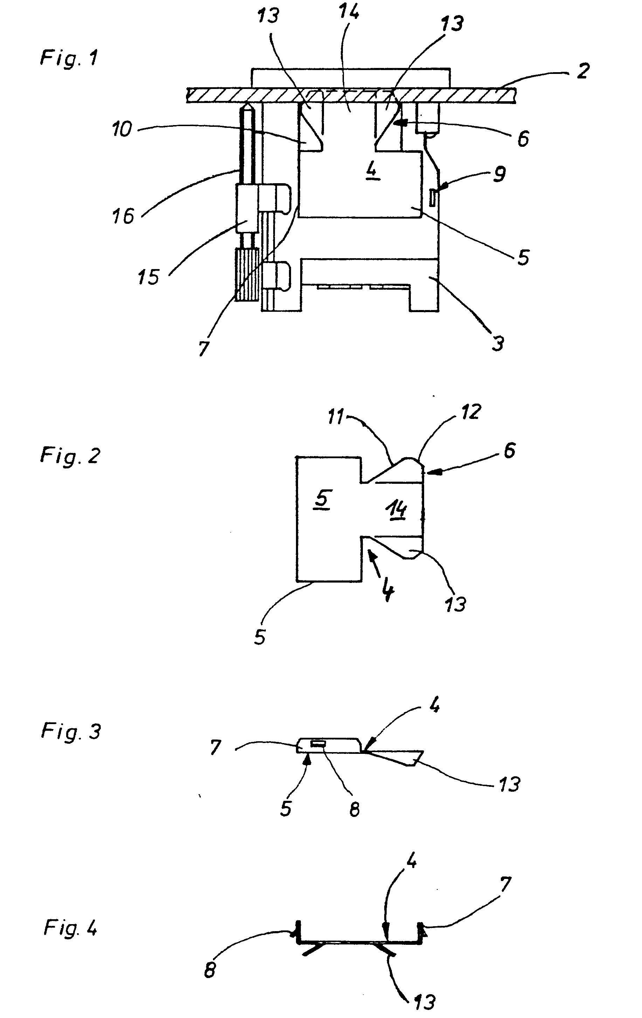

Fig. 1 zeigt im Schnitt eine Schalttafel 2, in deren Öffnung ein Gehäuse 3 angeordnet ist. Das Gehäuse 3 wird mit einer Befestigungsvorrichtung in Form einer Platte 4 an der Schalttafel 2 befestigt. Die Platte 4 besteht aus einem Halterungsteil 5 und einem Klemmteil 6. Der Halterungsteil 5 der Platte 4 ist in schlitzförmigen Ausnehmungen des Gehäuses 3 mittels zweier Enden 7 eingepasst. Weitere Ausnehmungen 9 am Gehäuse 3 ermöglichen ein Lösen der Platte 4 mittels Schraubenzieher. Die Platte 4 liegt eben auf dem Gehäuse 3 in einer gleich grossen flachen Ausnehmung 10 auf. Der Klemmteil 6 der Platte 4 weist ein ebenes Mittelteil 14 auf, an dem zwei V-förmig abgeschrägte Federflächen 13 aus der Plattenebene heraus abgewinkelt angeformt sind. Diese Federflächen 13 bilden die eigentliche Befestigung des Gehäuseteils 3 an der Schalttafel 2. Ein Montieren des Gehäuses 3 in die Schalttafel 2 wird durch einfaches axiales Eindrücken des Gehäuses erreicht. Kurz vor dem Ende des Montagevorganges schnappen die Federflächen 13 hinter die Schalttafel 2. Ein Lösen des Gehäuses 3 aus der Schalttafel 2 ist durch Ziehen des Gehäuses 3 aus der Schalttafel 2 zu erreichen. Ist die endgültige Lage des Gehäuses 3 in der Schalttafel 2 gefunden, kann bei Bedarf über ein zusätzliches Befestigungselement 15 mittels einer Gewindespindel 16 ein absolut fester Sitz erreicht werden. Die Befestigungselemente sind Gegenstand der zusätzlichen Anmeldung DE-OS 2 905 317.

In Fig. 1 ist ausserdem zu erkennen, dass die Platte 4 aus Platzgründen aussermittig am Gehäuse 3 angeordnet ist. Die beiden Federflächen 13 dagegen sind als Befestigungselemente mittig zum Gehäuse 3 angeordnet.

Fig. 2 zeigt eine Draufsicht auf die Platte 4. Der Halterungsteil 5 ist rechteckig und der Klemmteil 6 flügelförmig ausgebildet. Der Klemmteil 6 weist ein ebenes Mittelteil 14 auf, das die an den Federflächen auftretenden Kräfte flächig auf das Gehäuse des Messinstrumentes überträgt. Die Federflächen 13 weisen Spannschrägen 11 und Einrastschrägen 12 auf. Während des Montierens gleiten die Spannschrägen 11 an der quadratischen Öffnung der Schalttafel 2 entlang, und die Einrastschrägen 12 schnappen nach Beendigung des Montagevorgangs hinter die Schalttafel 2.

Fig. 3 zeigt die Platte 4 in einer Seitenansicht. Vom Halterungsteil 5 sind zur einen Seite der Plattenebene die Enden 7 abgewinkelt und zur anderen Seite die Federflächen 13. In den Enden 7 der Platte 4 sind kleine Rastklinken 8 angeordnet. Diese verankern die Enden 7 im Gehäuse 3, wenn die Platte 4 auf das Gehäuse 3 montiert wird.

Fig. 4 zeigt eine zweite Seitenansicht der Platte 4. In dieser Seitenansicht sind die U-förmigen, zur einen Seite gebogenen Enden 7 und die V-förmigen, zur anderen Seite gebogenen Federflächen 13 zu erkennen. An den U-förmig gebogenen Enden 7 befinden sich die Rastklinken 8, die nach Einbau der Platte 4 in Ausnehmungen 9 des Gehäuses 3 den Halterungsteil 5 am Gehäuse 3 verankern. Damit ist ein Verkanten, Verrutschen oder Verschieben der Befestigungsplatte 4 am Gehäuse 3 nicht möglich. Die Rastklinke 8 kann zum Ausbau der Platte 4 federnd zurückgebogen werden. Die V-förmige Anordnung der Federflächen 13 kann je nach den benötigten Befestigungskräften in verschiedene V-Stellungen abgewinkelt werden. Je flacher der Winkel der Federflächen 13 aus der Plattenebene ist, desto schwächer ist die nach dem Schnappvorgang auftretende Befestigungskraft. Je grösser der Winkel der Federflächen 13 zur Plattenebene gewählt wird, desto grösser ist die Befestigungskraft.

**Patentansprüche**

1. Vorrichtung zur Befestigung von Messinstrumenten in Schalttafeln, mit zwei an gegenüberliegenden Seiten des Gehäuses (3) des Messinstrumentes angeordneten Befestigungselementen (5), wobei jedes Befestigungselement (5) aus einer dünnen federnden Platte besteht, die am Gehäuse (3) befestigt ist und die aus einem Halterungsteil (5) und einem flügelförmig gewinkelten Klemmteil (6) gebildet ist, dadurch gekennzeichnet, dass für die Befestigung eines quaderförmigen Gehäuses der Halterungsteil (5) rechteckig ausgebildet ist und an seinen Schmalseiten Enden (7) U-förmig aus der Plattenebene abgewinkelt sind, dass diese Enden (7) parallel zueinander stehen und federnde Rastklinken (8) besitzen, dass der Halterungsteil (5) plan in einer gleich grossen Ausnehmung (10) im Gehäuse (3) eingepasst ist, ohne die Aussenabmasse des Gehäuses (3) zu vergrössern wobei die Rastklinken (8) die Platte (4) in Ausnehmungen (9) des Gehäuses (3) lösbar verankern.

2. Vorrichtung nach Anspruch 1, dadurch gekennzeichnet, dass der Klemmteil (6) aussermittig am Halterungsteil (5) angeordnet ist.

3. Vorrichtung nach Anspruch 1, dadurch gekennzeichnet, dass der Klemmteil (6) der Platte (4) mittig zum Gehäuse (3) angeordnet ist.

4. Vorrichtung nach einem der vorhergehenden Ansprüche, dadurch gekennzeichnet, dass der V-förmige Klemmteil (6) ein ebenes Mittelteil (14) in der Plattenebene besitzt, das plan auf dem Gehäuse (3) aufliegt.

5. Vorrichtung nach einem der vorhergehenden Ansprüche, dadurch gekennzeichnet, dass die abgewinkelten Federflächen (13) vor der Montage über den quaderförmigen Aussenumriss des Gehäuses (3) hinausragen.

6. Vorrichtung nach wenigstens einem der vorhergehenden Ansprüche, dadurch gekennzeichnet, dass an diametral entgegengesetzten Ecken des Gehäuses (3) zusätzliche Befestigungselemente (15) mit Gewindespindeln (16) angeordnet sind.

## Claims

1. Device for mounting measuring instruments in control panels, with two mounting elements (5) arranged at opposite sides of the housing (3) of the measuring instrument, each mounting element (5) consisting of a thin elastic plate which is mounted on the housing (3) and which is formed from a holding part (5) and a wing-shaped angled clamping part (6), characterized in that the holding part (5) is constructed to be rectangular for mounting a cuboid housing, and ends (7) are angled in a U-shape away from the plane of the plate at its narrow sides, in that these ends (7) are parallel to one another and have elastic locking catches (8), in that the holding part (5) is fitted flat into an opening (10) of equal size in the housing (3) without increasing the external dimensions of the housing (3), in which arrangement the locking latches (8) detachably anchor the plate (4) in openings (9) in the housing (3).

2. Device according to Claim 1, characterized in that the clamping part (6) is arranged off-centre on the holding part (5).

3. Device according to Claim 1, characterized in that the clamping part (6) of the plate (4) is arranged centrally with respect to the housing (3).

4. Device according to one of the preceding claims, characterized in that the V-shaped clamping part (6) has a level centre part (14) in the plane of the plate which rests flattly on the housing (3).

5. Device according to one of the preceding claims, characterized in that the angled elastic faces (13) project beyond the cuboid external contour of the housing (3) before assembly.

6. Device according to at least one of the preceding claims, characterized in that additional mounting elements (15) with threaded spindles (16) are arranged at diametrically opposite corners of the housing (3).

## Revendications

1. Dispositif de fixation d'instruments de mesure dans des tableaux de distribution, au moyen de deux éléments de fixation (5) placés sur des faces opposées du boîtier (3) de l'instrument de mesure dont chacun se compose d'une plaque élastique mince fixée audit boîtier (3) formée d'une partie de maintien (5) et d'une partie de serrage (6) pliée en genre d'ailes, caractérisé par le fait que, pour la fixation d'un boîtier parallélépipédique, la partie de maintien (5) est établie rectangulaire et, sur ses petits côtés, des extrémités (7) sont pliées en forme de «U» hors du plan de la plaque, ces extrémités (7) étant parallèles entre elles et possèdant des cliquets d'enclenchement élastiques (8), ladite partie de maintien (5) étant emboîtée à fleur dans un évidement (10) de même grandeur du boîtier (3) sans agrandir les dimensions extérieures de ce dernier et les cliquets d'enclenchement (8) assujettissant de façon amovible la plaque (4) dans des évidements (9) du boîtier.

2. Dispositif selon la revendication 1, caractérisé par le fait que la partie de serrage (6) est placée de façon excentrée par rapport à la partie de maintien (5).

3. Dispositif selon la revendication 1, caractérisé par le fait que la partie de serrage (6) de la plaque (4) est placée de façon centrée par rapport au boîtier (3).

4. Dispositif selon l'une des revendications précédentes, caractérisé par le fait que la partie de serrage (6) en forme de «V» possède dans le plan de la plaque une partie médiane (14) qui repose à plat sur le boîtier (3).

5. Dispositif selon l'une des revendications précédentes, caractérisé par le fait que les surfaces élastiques pliées (13) dépassent du contour extérieur parallélépipédique du boîtier (3).

6. Dispositif selon au moins l'une des revendications précédentes, caractérisé par le fait que des éléments de fixation supplémentaires (15) à tiges filetées (16) sont placés sur des coins diamétralement opposés du boîtier (3).

0 072 502

Fig. 1

13    14    13
2

10
6

16

15
9

7
5

3

Fig. 2

11    12
6

5    14

4

5
13

Fig. 3

4

7
13

5    8

Fig. 4

4
7

8
13

5